**Europäisches Patentamt**

**European Patent Office**

**Office européen des brevets**

(19)

(11) Veröffentlichungsnummer : **0 125 370**
**B1**

(12) **EUROPÄISCHE PATENTSCHRIFT**

(45) Veröffentlichungstag der Patentschrift :
**28.05.86**

(21) Anmeldenummer : **84100317.1**

(22) Anmeldetag : **13.01.84**

(51) Int. Cl.⁴ : **A 01 G 13/00**

(54) **Verfahren zur Behandlung geschädigter Vegetation und Vorrichtung dazu.**

(30) Priorität : **19.04.83 DE 3314123**

(43) Veröffentlichungstag der Anmeldung :
**21.11.84 Patentblatt 84/47**

(45) Bekanntmachung des Hinweises auf die Patenterteilung : **28.05.86 Patentblatt 86/22**

(84) Benannte Vertragsstaaten :
**AT CH DE FR GB LI SE**

(56) Entgegenhaltungen :
**EP-A- 0 111 298**
**US-A- 4 052 167**
**COMMONWEALTH AGRICULTURAL BUREAUX, A. HUTTERMANN et al. "The effects of pollutants and liming on the morphology of Fagus sylvatica roots", Zusammenfassung Nr. 83374210**

(73) Patentinhaber : **NICO-PYROTECHNIK Hanns-Jürgen Diederichs GmbH & Co. KG**
**Bei der Feuerwerkerei 4**
**D-2077 Trittau Bez. Hamburg (DE)**

**Gesellschaft für Strahlen- und Umweltforschung mbH**
**Herrenhäuser Strasse 2**
**D-3000 Hannover (DE)**

(72) Erfinder : **Krone, Uwe, Dr. Dipl.-Chem.**
**Schulstrasse 27**
**D-2071 Hamfelde (DE)**
Erfinder : **Kühn, Wilhelm, Prof. Dr. Dipl.-Phys.**
**Zilleweg 4b**
**D-3000 Hannover 91 (DE)**
Erfinder : **Georgi, Bernd, Dr. Dipl.-Phys.**
**Alleestrasse 36**
**D-3000 Hannover 1 (DE)**

(74) Vertreter : **Behrens, Ralf Holger, Dipl.-Phys.**
**in Firma Rheinmetall GmbH Ulmenstrasse 125 Postfach 6609**
**D-4000 Düsseldorf 1 (DE)**

**Beschreibung**

Die Erfindung betrifft ein Verfahren zur Behandlung geschädigter Vegetation nach dem Oberbegriff des Patentanspruchs 1 sowie eine zur Durchführung des Verfahrens geeignete Vorrichtung.

Unter geschädigter Vegetation werden durch Umwelteinflüsse oder Umweltgifte geschädigte Pflanzenbestände, insbesondere auch Hochwald verstanden ; jedoch ist das erfindungsgemäße Verfahren mit Erfolg auch dann anwendbar, wenn die Schädigung nicht durch Umwelteinflüsse bedingt ist, sondern beispielsweise auf Krankheiten und/oder ungenügende Bodenverhältnisse zurückgeht. Es ist allgemein bekannt, daß in jüngster Zeit, selbst in Gebieten mit geringer industrieller Schadstoffbelastung erhebliche Schädigungen der Vegetation beobachtet worden sind. Diese Schädigungen werden nach heutigem Stand der Kenntnis durch als Umweltgifte wirksame Abfallprodukte hervorgerufen, die, wie beispielsweise Schwefeldioxid und Stickoxide, durch Verbrennungsvorgänge entstehen und nach unkontrollierter Entlassung in die Atmosphäre sich über weite Gebiete ausbreiten.

Vorteilhafte Ausgestaltungen und Weiterbildungen sowie Vorrichtungen zur Durchführung des erfindungsgemäßen Verfahrens gehen aus den Unteransprüchen hervor.

Die Erfindung wird nachfolgend näher erläutert.

Mittels des erfindungsgemäßen Verfahrens soll eine Säureneutralisation und eine verbesserte Nährstoffzufuhr in geschädigten Vegetationsbereichen der Forst- und Landwirtschaft sowie eine Vorbeugung zur Vermeidung derartiger Schäden bewirkt werden. Derartige Schäden treten insbesondere durch sogenannten « sauren Regen » auf, der infolge der Erschließung von Energie aus fossilen Brennstoffen entsteht. Es werden dabei Schwefeldioxid und Stickoxide in die Atmosphäre entlassen, durch die eine starke Ansäuerung der Niederschläge verursacht wird. Entsprechend den metereologischen Bedingungen kann diese Schadstoffkonzentration sehr weit vom Ursprungsort entfernt auftreten, so daß sich heute angesäuerter Regen oder Schnee nahezu überall. selbst in sehr abgelegenen Gebieten ohne dichte Besiedlung oder Industriekonzentration antreffen lassen. Die negativen Auswirkungen dieser Schadstoffe auf die Seen, Flüsse, Wälder, auf die Landwirtschaft und die Böden sind augenfällig.

Aus der EP-A-0111298 ist ein Düngemittelspray bekannt, dessen Nährstoff den Pflanzen in Form eines unmittelbar durch das Blattwerk aufnehmbaren Aerosols zugeführt werden soll. Dabei besteht das Düngemittel aus einer — aus einer organischen und einer wässrigen Phase gebildeten — Wasser-in-Öl-Emulsion in einer innen lackierten Sprühdose mit Ventil, in der sich ein Treibgas befindet. Mit derartigen Anordnungen lassen sich nur Tropfen des Aerosols im Bereich von 100 bis 500 Mikrometer erzielen, wodurch eine wirksame Aufnahme des Nährstoffs durch das Blattwerk oder Nadelwerk erschwert ist. Außerdem sind mit einer derartigen Anordnung die Baumkronen schwer zu erreichen, insbesondere läßt sich nicht oberhalb eines Pflanzenwuchses eine Aerosolwolke erzielen.

Der Erfindung liegt die Aufgabe zugrunde, den bereits vorhandenen Schädigungen Einhalt zu gebieten und darüber hinausgehend derart vorbeugend zu wirken, daß die stark belastete Vegetation weiteren Belastungen besser standhält. Dabei soll das Aerosol in so feiner Tropfengröße erzeugt werden, daß seine wirksamen Substanzen durch das Blatt- oder Nadelwerk leicht aufgenommen werden können.

Diese Aufgabe wird durch das in Patentanspruchs 1 angegebene Verfahren gelöst.

So gelangen die Schadstoffe beispielsweise in die Nadeln und/oder Blätter von Pflanzen und Bäumen und verursachen beträchtliche Schäden. Offensichtlich treten diese Schäden ganz besonders stark in solchen Gegenden auf, in denen die Böden ohnehin schon sauer geworden sind bzw. kalkarm oder natürlicherweise sauer sind. Saure Böden, die als Folge saurer Niederschläge entstehen, führen in der Regel zu verminderten Ernteerträgen, wenn ihnen nicht ständig größere Kalkmengen beigemischt werden. Im Zusammenhang mit der durch Industrie verursachten Luftverunreinigung an giftigen Schwermetallen und diversen organischen Verbindungen ist dieser saure Niederschlag sehr wahrscheinlich für das jetzt in vermehrtem Umfang beobachtete Absterben von Waldgebieten verantwortlich, da aus den Nadeln und Wurzeln der Gehölze die für das Wachstum benötigten Nährstoffe wie Kalzium, Magnesium, Zink, Mangan usw. ausgewaschen werden.

Die Erfindung geht von der Erkenntnis aus, daß eine schnelle und nachhaltige Abhilfe besonders dadurch möglich ist, daß den negativen Einfluß der Schadstoffe kompensierende Maßnahmen in der Atmosphäre selbst, und zwar zweckmäßig im bodennahen Luftraum durchgeführt werden.

Es wäre zwar möglich, in an sich bekannter Weise zusätzliche Nährstoffe und/oder die Schadstoffe kompensierende Substanzen dem Boden am Standort der geschädigten Pflanzen beizumengen, so wie es bei Kunstdüngergaben in der Landwirtschaft üblich ist. Dieses Verfahren bringt jedoch den Nachteil, daß die Aufnahme dieser Stoffe durch die Pflanzen auf dem üblichen Weg über das Wurzelwerk zu langsam erfolgt und die erschreckend schnell fortschreitenden Schädigungen nicht mehr aufgehalten werden können.

Erfindungsgemäß werden für die Vegetation günstige Stoffe oder Stoffkombinationen, die als Nährstoffe wirksam sind oder Säure neutralisieren, in Form von Aerosolen ausgebracht. Diese Aerosole werden zweckmäßig unmittelbar am Standort der geschädigten Pflanzen erzeugt, wie nachfolgend noch erläutert wird. Die Aerosole enthalten Nährstoffe, wie Kalzium, Magnesium sowie Zink oder andere Spurenelemente, die von den Pflanzen unmittelbar über die Nadeln bzw. die Blätter aufgenommen werden können. Die auf den Boden herabsinkenden Aerosolbestandteile stehen den Pflanzen bzw. Bäumen dann zusätzlich noch auf dem üblichen Aufnahmeweg über die Wurzeln zur Verfügung.

Besonders zweckmäßig und preisgünstig werden geeignete Aerosole auf pyrotéchnischem Weg erzeugt, wodurch sich eine besondere flexible Anwendungsart ergibt. Mit Hilfe pyrotechnisch erzeugter Aerosole können nämlich geeignete Stoffe bzw. Stoffkombinationen an jeder benötigten Stelle innerhalb, außerhalb oder auch oberhalb eines Pflanzenbewuchses, insbesondere auch in Wäldern, für Behandlungszwecke appliziert werden. Beispielsweise können mit dem erfindungsgemäßen Verfahren räumlich ausgedehnte, langsam in ein Waldgebiet sedimentierende Aerosolwolken innerhalb oder oberhalb von Waldgebieten erzeugt werden. Mit herkömmlichen maschinellen Vorrichtungen wäre dies nicht möglich, denn die herkömmlichen Verfahren benutzen z. B. zur zusätzlichen Kalkung lediglich landwirtschaftliche Fahrzeuge, ·deren Einsatz in Waldgebieten auf befahrbare Forstwege beschränkt und zudem kosten- und zeitaufwendig ist.

Geeignete pyrotechnische Zusammensetzungen lassen sich dagegen ohne große Schwierigkeiten auch in un wegsamem Waldgelände ausbringen und notfalls per Fernzündung in Funktion versetzen.

Im Rahmen des erfindungsgemäßen Verfahrens werden Aerosole ausgebracht, die die benötigten Substanzen, nämlich vorzugsweise Kalzium und Magnesiumverbindungen in der Form von Oxiden, Hydroxiden oder Chloriden enthalten, so daß die Stoffe unmittelbar von den Nadeln und Blättern der Bäume oder Pflanzen aufgenommen werden können.

Besonders zweckmäßige Vorrichtungen zur Durchführung des erfindungsgemäßen Verfahrens bestehen aus pyrotechnischen Sätzen in Form von Preßkörpern.

Die Chemikalien werden miteinander vermischt und zu Preßkörpern verdichtet (ca. 300-800 bar).

Dabei wird der Preßkörper gleichzeitig mit einem in der Pyrotechnik bekannten Anzündsatz verbunden.

Nach Anzündung reagiert der pyrotechnische Satz unter Bildung eines weißen Nebels (Aerosol), der hauptsächlich aus den Oxiden und Chloriden von Calcium und Magnesium besteht. Hinzu kommen die Oxide bzw. Chloride von Kalium und den Spurenelementen. Bei der Reaktion treten Temperaturen in der Größenordnung von 2 000 °C auf, und es verbleibt ein Rückstand, der hauptsächlich Magnesiumoxid enthält. Besonders vorteilhaft ist es, daß der pH-Wert des auf diese Weise erzeugten Aerosols zwischen 5 und 9 liegt, so daß Schädigungen der Vegetation vermieden werden.

Als für die Anwendung besonders zweckmäßig haben sich Aerosole mit Teilchengrößen in der Größenordnung von 1 Mikrometer und kleiner erwiesen, da diese einen möglichst langen Kontakt der Aerosolwolken mit den Bestandteilen der bodennahen Atmosphäre und der Vegetation ermöglichen und zudem von den Pflanzen leicht aufgenommen werden können.

Abgesehen von der zusätzlichen Zufuhr von lebensnotwendigen Nahrungsstoffen ermöglicht das erfindungsgemäße Verfahren auch die Luftreinigung in unmittelbarer Umgebung der Pflanzen, da durch chemische Reaktion der Aerosolbestandteile mit ggf. vorhandenen Schadstoffen deren Neutralisierung erreichbar ist.

Es wurde bereits erwähnt, daß beim Abbrand der pyrotechnischen Preßlinge sehr hohe Temperaturen erreicht werden, die an und für sich eine sehr widerstandsfähige und damit teure Umhüllung notwendig machen würden.

Um die Anwendung des Verfahrens möglichst preisgünstig zu gestalten und es daher auf breitester Ebene durchführbar zu machen, was sich angesichts der heute schon beobachteten Schäden als unumgänglich erweisen wird, wird anstelle einer massiven Verpackung vorgeschlagen, die Preßkörper hüllenlos einzusetzen. Die Preßkörper werden dazu beispielsweise zum Abbrand unmittelbar im Boden am Standort der Pflanzen eingegraben, und zwar derart, daß zum Abzug des Aerosols noch eine ausreichend große Öffnung verbleibt.

Eine einfache und preiswerte Aufbewahrung der Preßkörper ist in wasserdampfdichten Kunststoffbeuteln möglich.

## Patentansprüche

1. Verfahren zur Behandlung geschädigter Vegetation, bei dem dieser für das Wachstum benötigte Nährstoffe sowie Spurenelemente und/oder Umweltgifte kompensierende Substanzen als Aerosol zugeführt werden, dadurch gekennzeichnet, daß das Nährstoffe, Spurenelemente und-/oder die Umweltgifte kompensierende Aerosol am Standort der Pflanzen auf pyrotechnischem Weg erzeugt und ausgebracht wird.

2. Verfahren nach Anspruch 1, dadurch gekennzeichnet, daß die Aerosolteilchen in Teilchengröße im Bereich von 1 Mikrometer und kleiner vorliegen.

3. Vorrichtung zur Durchführung des Verfahrens nach Anspruch 1 oder 2, gekennzeichnet durch einen pyrotechnischen Satz in Form eines Preßköpers.

4. Vorrichtung nach Anspruch 3, dadurch gekennzeichnet, daß der pyrotechnische Satz aus Oxid, Peroxid und/oder Hydroxid von Calcium sowie metallischem Magnesium aufgebaut ist, und zur Steuerung von Abbrand und Aerosolzusammensetzung zusätzlich Kaliumperchlorat, Kaliumchlorid sowie Verbindungen von Spurenelementen enthalten kann.

5. Vorrichtung nach einem der Ansprüche 3 oder 4 dadurch gekennzeichnet, daß das bei der Umsetzung des Preßkörpers erzeugte Aerosol einen pH-Wert zwischen 5 und 9 ergibt.

6. Vorrichtung nach einem der Ansprüche 3 bis 5, dadurch gekennzeichnet, daß der Preßkörper durch Anwendung eines Drucks zwischen 300 und 800 bar hergestellt ist.

7. Vorrichtung nach einem der Ansprüche 3 bis 6, dadurch gekennzeichnet, daß der Preßkörper hüllenlos eingesetzt wird und lediglich zum Zwecke der Aufbewahrung und/oder des Transports mit einer vorzugsweise wasserdampfdichten Kunststoffhülle umgeben ist.

**Claims**

1. Process for the treatment of damaged vegetation, by supplying same with the nutrients required for growth as well as trace elements and/or substances neturalising environmental poisons as an aerosol, characterized by the fact that the nutrients, trace elements and/or aerosol neutralizing environmental poisons are pyrotechnically generated and produced in the location of the plants.

2. Process in accordance with Claim 1, characterized by the fact that the aerosol particles are present in a size of 1 micrometre and smaller.

3. Means for the performance of the process described in Claim 1 or 2, characterized by a pyrotechnic composition in the form of a pressed body.

4. Means in accordance with Claim 3, characterized by the fact that the pyrotechnical composition is made up from oxide, peroxide and/or hydroxide of calcium as well as metallic magnesium and that in order to control the consumption by burning and the composition of the aerosol it may in addition contain potassium perchlorate, pottasium chloride as well as compounds of trace elements.

5. Means in accordance with any one of Claims 3 or 4, characterized by the fact that the aerosol produced during the conversion of the pressed body results in a pH value of between 5 and 9.

6. Means in accordance with any of Claims 3 to 5, characterized by the fact that the pressed body is produced by the application of a pressure of between 300 and 800 bar.

7. Means in accordance with Claims 3 to 6, characterized by the fact that the pressed body is used without a covering and that it is surrounded by a preferably steamtight plastic covering solely for purposes of storage and/or transport.

**Revendications**

1. Procédé pour traiter de la végétation endommagée, dans lequel on amène à celle-ci les substances nutritives nécessaires à sa croissance ainsi que des oligo-éléments et/ou des substances compensant les substances polluantes sous la forme d'aérosol, caractérisé en ce que l'aérosol compensant les substances nutritives, les oligo-éléments et/ou les substances polluantes est produit et répandu à l'emplacement des plantes par des moyens pyrotechniques.

2. Procédé selon la revendication 1, caractérisé en ce que les particules d'aérosol se présentent sous la forme de particules de l'ordre de grandeur d'un micron et moins.

3. Dispositif pour mettre en œuvre le procédé selon la revendication 1 ou 2, caractérisé par une charge pyrotechnique sous la forme d'un corps comprimé.

4. Dispositif selon la revendication 3, caractérisé en ce que la charge pyrotechnique est constituée d'oxyde, peroxyde et/ou hydroxyde de calcium ainsi que de magnésium métallique et que, pour commander la combustion et la synthèse de l'aérosol, elle peut contenir en plus du perchlorate de potassium, du chlorure de potassium ainsi que des composés d'oligo-éléments.

5. Dispositif selon l'une des revendications 3 ou 4, caractérisé en ce que l'aérosol produit par la transformation du corps comprimé a un pH compris entre 5 et 9.

6. Dispositif selon l'une des revendications 3 à 5, caractérisé en ce que le corps comprimé est fabriqué en utilisant une pression comprise entre 300 et 800 bars.

7. Dispositif selon l'une des revendications 3 à 6, caractérisé en ce que le corps comprimé est utilisé sans enveloppe et qu'il n'est entouré d'une enveloppe de matière plastique, de préférence imperméable à la vapeur d'eau, qu'aux seules fins de stockage et/ou de transport.